(19) Europäisches Patentamt
European Patent Office
Office européen des brevets

(11) **EP 3 712 225 B1**

(12) **EUROPEAN PATENT SPECIFICATION**

(45) Date of publication and mention
of the grant of the patent:
**22.05.2024   Bulletin 2024/21**

(21) Application number: **18878714.7**

(22) Date of filing: **09.11.2018**

(51) International Patent Classification (IPC):
**C08K 3/22** *(2006.01)*

(52) Cooperative Patent Classification (CPC):
(C-Sets available)
**C08K 3/22;** C08K 2003/2258           (Cont.)

(86) International application number:
**PCT/JP2018/041738**

(87) International publication number:
**WO 2019/098144 (23.05.2019 Gazette 2019/21)**

(54) **INFRARED ABSORBER OBJECT**

INFRAROTABSORBEROBJEKT

OBJET ABSORBANT LES INFRAROUGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **14.11.2017   JP 2017219399**

(43) Date of publication of application:
**23.09.2020   Bulletin 2020/39**

(73) Proprietor: **Sumitomo Metal Mining Co., Ltd.
Tokyo 105-8716 (JP)**

(72) Inventors:
• **FUKUDA, Kenji
Isa-shi
Kagoshima 895-2501 (JP)**
• **KOBAYASHI, Hiroshi
Isa-shi
Kagoshima 895-2501 (JP)**
• **NAKAYAMA, Hiroki
Isa-shi
Kagoshima 895-2501 (JP)**

(74) Representative: **Jones, Nicholas Andrew
Withers & Rogers LLP
2 London Bridge
London SE1 9RA (GB)**

(56) References cited:
**JP-A- 2008 024 902     US-A1- 2015 153 478**

• **DATABASE WPI Week 201117 Thomson
Scientific, London, GB; AN 2011-B65441
XP002800489, -& JP 2011 026440 A (SUMITOMO
METAL MINING CO) 10 February 2011
(2011-02-10)**

(52) Cooperative Patent Classification (CPC): (Cont.)

C-Sets
**C08K 3/22, C08L 67/02**

**Description**

TECHNICAL FIELD

The present invention relates to an infrared absorber.

BACKGROUND ART

Various studies have been conducted regarding light blocking materials used for windows and the like.

For example, Patent Document 1 proposes a light blocking film having a light blocking layer containing a black fine powder of an inorganic pigment such as carbon black and titanium black, an organic pigment such as aniline black, or the like.

In addition, Patent Document 2 proposes an insulating sheet formed as a woven knitted fabric using a band-shaped film having infrared reflection properties and a band-shaped film having infrared absorption properties as a warp and a weft, respectively, and discloses an example of using a synthetic resin film that is subjected to an aluminum evaporation process and is further laminated as a band-shaped film having infrared reflection properties.

In Patent Document 3, a heat ray blocking glass is proposed in which a composite tungsten oxide film containing at least one metal ion selected from the group consisting of Group IIIa, Group IVa, Group Vb, Group VIb, and Group VIIb of the periodic table as the first layer on the substrate side is disposed on the transparent glass substrate, a transparent dielectric film is disposed on the first layer as the second layer, a composite tungsten oxide film containing at least one metal ion selected from the group consisting of Group IIIa, Group IVa, Group Vb, Group VIb, and Group VIIb of the periodic table as the third layer on the second layer, and the refractive index of the transparent dielectric film of the second layer is lower than that of the composite tungsten oxide film of the first layer and the third layer.

Patent Document 4 proposes a heat ray blocking glass including a first dielectric film disposed on a transparent glass substrate as a first layer from the substrate side, a composite tungsten oxide film disposed on the first layer as a second layer, and a second dielectric film disposed on the second layer in the same manner as in Patent Document 3.

Patent Document 5 proposes a heat ray blocking glass including a composite tungsten oxide film containing similar metallic elements and disposed on a transparent substrate from the substrate side as the first layer, and a transparent dielectric film disposed on the first layer in the same manner as the method in Patent Document 3.

Patent Document 6 proposes a solar-controlled glass sheet having solar-blocking characteristics, wherein a metal oxide film selected from one or more of tungsten trioxides ($WO_3$), molybdenum trioxide ($MoO_3$), niobium pentoxide ($Nb_2O_5$), tantalum pentoxide ($Ta_2O_5$), vanadium pentoxide ($V_2O5$), and vanadium dioxide ($VO2$) containing an additive material such as hydrogen, lithium, sodium, or potassium is formed using a CVD process or a spray process.

Patent Document 7 proposes a solar modulated photo-modulated photo-insulation material including a tungsten oxide film containing polyvinylpyrrolidone on a transparent substrate.

In addition, the applicant of the present patent proposed in Patent Document 8 a method of manufacturing tungsten oxide fine particles exhibiting electrochromic characteristics, wherein tungsten hexachloride fine particles dissolve in alcohol, the solvent evaporates as it is, or the solvent evaporates after refluxing, and is then heated at 100 °C to 500 °C to obtain a powder consisting of tungsten trioxide, its hydrate, or a mixture of both, and an electrochromic element using the tungsten oxide fine particles.

Patent Document 9 proposes a method of manufacturing tungsten bronze, wherein a dry form of an aqueous solution of ammonium meta-type tungstate and a metal salt are reduced with hydrogen, thereby forming tungsten bronze.

The applicant disclosed in Patent Document 10 an infrared light blocking material fine particle dispersed element in which the infrared light material fine particles are dispersed in a medium, wherein the infrared light material fine particles contain tungsten oxide fine particles and/or composite tungsten oxide fine particles, and wherein the particle diameters of the infrared material fine particles are 1 nm or more and 800 nm or less.

PRIOR ART DOCUMENTS

PATENT DOCUMENTS

Patent Document 1: Japanese Laid-Open Patent Application Publication No. 2003-029314
Patent Document 2: Japanese Laid-Open Patent Application Publication No. H9-107815
Patent Document 3: Japanese Laid-Open Patent Application Publication No. H8-59300
Patent Document 4: Japanese Laid-Open Patent Application Publication No. H8-12378
Patent Document 5: Japanese Laid-Open Patent Application Publication No. H8-283044

Patent Document 6: Japanese Laid-Open Patent Application Publication No. 2000-119045
Patent Document 7: Japanese Laid-Open Patent Application Publication No. H9-127559
Patent Document 8: Japanese Laid-Open Patent Application Publication No. 2003-121884
Patent Document 9: Japanese Laid-Open Patent Application Publication No. H8-73223
Patent Document 10: International Publication No. WO 2005/037932

SUMMARY OF THE INVENTION

PROBLEMS TO BE SOLVED BY THE INVENTION

As a light blocking member used as a window material and the like, an infrared absorber capable of absorbing light in an infrared region such as near infrared light from sunlight has been used for a long time, and various studies have been conducted, as disclosed in Patent Document 10. However, in recent years, various types of infrared absorbers have been sought, and in order to deal with this matter, infrared absorbers including new structures have been sought.

According to one aspect of the present invention, it is intended to provide an infrared absorber having a novel structure.

MEANS FOR SOLVING THE PROBLEM

According to one aspect of the present invention, there is provided an infrared absorber that includes a resin medium, and a composite tungsten oxide particle cluster composed of composite tungsten oxide particles clustered together and disposed in the resin medium,
wherein the composite tungsten oxide particle cluster has at least one shape selected from the group consisting of a band shape, a scale shape and a rod shape, and wherein a length of the composite tungsten oxide particle cluster is 2 um or less in a widthwise direction and 10 um or less in a lengthwise direction as determined following stretching of a mixture of the composite tungsten oxide particles and the resin medium.

ADVANTAGEOUS EFFECT OF THE INVENTION

In one aspect of the present invention, an infrared absorber having a novel structure can be provided.

BRIEF DESCRIPTION OF THE DRAWINGS

FIG. 1 is a transmission electron micrograph of an infrared absorber according to Example 1 viewed from a plane in an extending direction;
FIG. 2 is a transmission electron micrograph of an infrared absorber of Example 1 viewed in a cross section parallel to the extending direction and a thickness direction; and
FIG. 3 is a transmission electron micrograph of an infrared absorber in Reference Example 1.

MODE OF CARRYING OUT THE INVENTION

[Infrared Absorber]

In the present embodiment, an example of a configuration of an infrared absorber will be described.
The infrared absorber in the present embodiment can comprise a resin medium, and a composite tungsten oxide particle cluster composed of composite tungsten oxide particles clustered together and disposed within the resin medium.
The composite tungsten oxide particle cluster have one or more shapes selected from a band shape, a scale shape, and a rod shape.
Conventionally, for the purpose of suppressing light scattering in the visible range and ensuring transparency, the solar blocking particles have been uniformly dispersed in the transparent resin, and have been formed as a solar blocking material particle dispersed element. However, the inventors of the present invention have found that even an infrared absorber arranged in a composite tungsten oxide particle cluster that is locally densely aggregated into a resin medium can inhibit light scattering in the visible region, and can absorb light in the infrared region while ensuring transparency. That is, the invention has been completed by finding an infrared absorber having a novel structure including a composite tungsten oxide particle cluster.

The components contained in the infrared absorber according to the present embodiment will be described below.

(Complex Tungsten Oxide Particles)

The infrared absorber of the present embodiment contain composite tungsten oxide particles. The composite tungsten oxide particles serve as an infrared absorbing material (infrared absorbing particles).

The optical properties of the dispersed matter in which the composite tungsten oxide particles are dispersed in a solvent or solid medium are not limited, but for example, the transmittance of light preferably has a local maximum value in the range from 350 nm to 600 nm, and has a local minimum value in the range from 800 nm to 2100 nm. In particular, with respect to the light transmittance, the dispersed matter of the composite tungsten oxide particles more preferably has a local maximum value in the range from 440 nm to 600 nm, and a local minimum value in the range from 1150 nm to 2100 nm.

That is, the dispersed matter of the composite tungsten oxide particles preferably has a local maximum transmittance value in the visible region and a local minimum transmittance value in the near infrared region.

The composite tungsten oxide particles are capable of absorbing light in the near infrared region, including a range from 1150 nm to 2100 nm, for example, as described above, and converting absorbed light into heat. As described above, composite tungsten oxide particles can absorb infrared light and convert the infrared light into heat, and thus the composite tungsten oxide particles can be applied to a window material that blocks infrared light and a fiber that generates heat from the absorbed infrared light.

The composite tungsten oxide containing the composite tungsten oxide particles will be described. The composite tungsten oxide particles contained in the infrared absorber according to the present embodiment may contain the composite tungsten oxide described below. Also, the composite tungsten oxide particles may be composed of a composite tungsten oxide, but again do not preclude the inclusion of an unavoidable component.

Before describing the composite tungsten oxide, the tungsten oxide without an element M will be described.

Generally, because there is no effective free electron in tungsten trioxide ($WO_3$), the absorption reflection properties in the near infrared region are low, and tungsten trioxide ($WO_3$) is not effective as an infrared absorbing material.

However, by making the ratio of oxygen to tungsten trioxide lower than three, free electrons can be generated in the tungsten oxide. The inventors of the present invention have found that there is a particularly effective range as an infrared absorbing material in a specific part in the composition range of tungsten and oxygen in the tungsten oxide.

In the composition range of tungsten and oxygen in the tungsten oxide, free electrons can be generated by setting the mass ratio (molar ratio) of oxygen to tungsten to be less than 3, and the composition range of the tungsten oxide is preferably $2.2 \leqq z/y \leqq 2.999$ when the tungsten oxide is expressed as WyOz.

This is because, when the value of z/y is 2.2 or more, the crystalline phase of the undesired $WO_2$ in the tungsten oxide can be more reliably avoided, because chemical stability as a material can be obtained, and because the material can be applied as an effective infrared absorbing material.

If the value of z/y is 2.999 or less, the required amount of free electrons is generated in the tungsten oxide, resulting in an efficient infrared absorbing material.

In addition, in the tungsten oxide, when expressed as the general formula WyOz, because the so-called "magneli phase" having a composition ratio of $2.45 \leq z/y \leq 2.999$ is chemically stable and has good light absorption properties in the near infrared region, the tungsten oxide is particularly preferred as an infrared absorbing material.

The composite tungsten oxide has a structure wherein the element M is added to the tungsten oxide.

As described above, in the composite tungsten oxide in which the element M is added, free electrons are generated, free electron-derived absorption properties are expressed in the near infrared region, and the compound is particularly effective as an infrared absorbing material capable of absorbing near-infrared light at a wavelength of 1000 nm.

Here, the element M added into the composite tungsten oxide is not particularly limited, but for example, one or more elements selected from H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I is cited as examples. Of these, the element M preferably contains one or more types selected from the alkali metal element and the alkaline earth metal element in view of the crystal structure to be described below.

By combining the control of the amount of oxygen described in the tungsten oxide and the addition of the element M that generates free electrons with respect to the composite tungsten oxide, a more efficient infrared absorbing material can be obtained.

The general formula of a composite tungsten oxide combined with the control of the amount of oxygen and the addition of an M element that generates free electrons can be expressed as, for example, MxWyOz (where M is the previously described M element; W is tungsten; and O is oxygen).

The x/y representing the mass ratio (molar ratio) of the element M that is an additive element to tungsten in a general formula of the composite tungsten oxide satisfies the requirement of $0.001 \leq x/y \leq 1.0$. In particular, the x/y preferably satisfies $0.001 \leq x/y \leq 0.5$, further preferably satisfies $0.001 \leq x/y \leq 0.37$, and particularly preferably satisfies $0.20 \leq x/y \leq 0.37$.

In addition, the z/y representing the mass ratio (molar ratio) of tungsten and oxygen in the above-described composite tungsten oxide in the general formula preferably satisfies the requirement of $2.2 \leq z/y \leq 3.0$. This is because, in addition to the same mechanism as for the tungsten oxide described above, the infrared light can be absorbed even when the z/y equals 3.0 because of the free electron supply due to the amount of added element M.

As described above, the composite tungsten oxide particles contained in the infrared absorber according to the present embodiment preferably contain the composite tungsten oxide particles represented by the following general formula (1). The composite tungsten oxide particles may be made particles made of a composite tungsten oxide represented by the following general formula (1). However, this does not exclude the inclusion of unavoidable components.

$$M_xW_yO_z \cdots \quad (1)$$

In the above general formula (1), the element M is preferably one or more elements selected from H, He, an alkali metal element, an alkaline earth metal element, a rare-earth element, Mg, Zr, Cr, Mn, Fe, Ru, Co, Rh, Ir, Ni, Pd, Pt, Cu, Ag, Ag, Zn, Cd, Al, Ga, In, Tl, Si, Ge, Sn, Pb, Sb, B, F, P, S, Se, Br, Te, Ti, Nb, V, Mo, Ta, Ta, Re, Be, Hf, Os, Bi, and I. More preferably, the element M comprises one or more elements selected from an alkali metal element and an alkaline earth metal element. In particular, the element M further preferably includes one or more elements selected from Cs, Rb, K, and Ba, and particularly preferably includes one or more elements selected from Cs and Rb. The element M may be, for example, one or more elements selected from the alkali metal element and the alkaline earth metal element.

In the above general formula (1), W represents tungsten, and O represents oxygen.

The x/y is preferably $0.001 \leqq x/y \leqq 1.0$, more preferably $0.001 \leqq x/y \leqq 0.5$, more and more preferably $0.001 \leqq x/y \leqq 0.37$, and particularly preferably $0.20 \leqq x/y \leqq 0.37$.

In addition, the z/y is preferably $2.2 \leq z/y \leq 3.0$.

Although the crystal structure of the composite tungsten oxide is not particularly limited, the composite tungsten oxide preferably has a hexagonal crystal structure. That is, the composite tungsten oxide particles contained in the infrared absorber of the present embodiment preferably contain a composite tungsten oxide of the hexagonal crystal structure. Such composite tungsten oxide particles may consist of a composite tungsten oxide having a hexagonal crystal structure.

This is because when the composite tungsten oxide has a hexagonal crystal structure, the composite tungsten oxide particles containing the composite tungsten oxide improve the transmittance of light in the visible region and the absorption of light in the near infrared region.

In such a hexagonal crystal structure, six octahedral bodies constituted of 6 units of $WO_6$ cluster to form a hexagonal space (tunnel), and the element M is arranged in the space to form a unit, and a large number of units constitute the hexagonal crystal structure.

In order to improve the light transmission properties in the visible region of the infrared absorber of the present embodiment and improve the light absorption properties in the near infrared region, the composite tungsten oxide particles containing the composite tungsten oxide particles preferably include the unit structure described above. As described above, the unit structure means a structure in which six hexagonal spaces are formed by aggregating six octahedrons formed of six $WO_6$ units, and the element M is arranged in the space.

This is because the presence of positive ions of the element M in the hexagonal space increases the absorption of light in the near infrared region. Generally, when an element M with a large ionic radius is added, the hexagonal crystal is easily formed. Among them, when the element M comprises one or more elements selected from alkali metal elements and alkaline earth metal elements, a hexagonal crystal is easily formed, which is preferable. In addition, when the element M comprises one or more types selected from Cs, Rb, K, and Ba, a hexagonal crystal is particularly easily formed and more preferably formed. Particularly, in the case of composite tungsten oxide particles containing one or more composite tungsten oxides selected from the element M from among Cs and Rb, the hexagonal structure is particularly preferable because the absorption performance of light in the near infrared region and the transmission performance of light in the visible region are particularly excellent.

The M element may be composed of one or more types selected from the alkali metal element and the alkaline earth metal element described above. However, composite tungsten oxides do not form hexagons only when the M element is one or more types selected from the alkali metal elements and the alkaline earth metal elements described above. The composite tungsten oxide may form hexagonal crystals even when one or more elements selected from the alkali metal element and the alkaline earth metal element, for example, one or more elements selected from Cs, Rb, K, and Ba, is used as the element M and when one or more candidate M elements other than the alkali metal element and the alkaline earth metal element are added.

As described above, the x/y, which indicates the amount of added element M, is preferably $0.001 \leq x/y \leq 1.0$,

more preferably $0.001 \leq x/y \leq 0.5$, more and more preferably $0.001 \leq x/y \leq 0.37$, and particularly preferably $0.20 \leq x/y \leq 0.37$. This is because when the x/y is in the range described above, the entire composite tungsten oxide can uniformly form a hexagonal crystal structure. Especially, when the x/y equals 0.33 representing the amount of added element M, the theoretically added element M is disposed in all of the hexagonal air gaps when the z/y equals 3, which is preferable.

The composite tungsten oxide particles including the infrared absorber according to the present embodiment are not particularly limited in average particle size, but the average particle size is preferably 100 nm or less. From the viewpoint of exerting superior infrared absorption properties (infrared light blocking properties) of the composite tungsten oxide particles including the infrared absorber according to the present embodiment, the average particle size of the composite tungsten oxide particles is preferably 10 nm or more and 100 nm or less, and the average particle size is further preferably 10 nm or more and 80 nm or less.

Here, the average particle size is the average value of the particle size of the individual composite tungsten oxide particles, and is the average value of the particle size of the unclustered composite tungsten oxide particles observed in an electron microscope. Therefore, the above-described average particle size can be calculated from the particle size of individual particles measured using an electron microscope image for composite tungsten oxide particles dispersed in a medium such as resin.

The method of calculating the average particle size of the composite tungsten oxide particles is not particularly limited. For example, a thinned sample of the composite tungsten oxide particle dispersed matter, which is first removed by cross-sectional processing, is manufactured. Then, the average particle size of the composite tungsten oxide particles can be obtained by measuring the particle size of the 100 composite tungsten oxide particles using an image processing apparatus and calculating the average value thereof from the transmission electron microscope image of the produced thinned sample. A microtome, a cross-sectional polisher, a focused ion beam (FIB) device, or the like may be used for cross-sectional processing for extracting the thinned sample from a composite tungsten oxide particle dispersed matter in a medium such as resin.

The crystallite diameter of the composite tungsten oxide particles is not particularly limited. However, from the viewpoint of achieving excellent infrared absorption properties, the crystallite diameter of the composite tungsten oxide particles is preferably 10 nm or more and 100 nm or less, more preferably 10 nm or more and 80 nm or less, further preferably 10 nm or more and 60 nm or less, and particularly preferably 10 nm or more and 40 nm or less. By making the crystallite diameter of the composite tungsten oxide particles 10 nm or more and 100 nm or less, the composite tungsten oxide particles exhibit particularly excellent infrared absorption properties.

The crystallite diameter can be calculated, for example, from the diffraction pattern of powder X-ray diffraction using the Scherrer equation.

The surface of the composite tungsten oxide particles may be coated with an oxide containing one or more elements selected from Si, Ti, Zr, and Al, for example. Such a coating may provide a particularly improved weatherability of the composite tungsten oxide particles, which is preferred.

(Resin Medium)

As noted above, the infrared absorber of the present embodiment has a resin medium. The resin medium retains the composite tungsten oxide particle cluster of the aforementioned composite tungsten oxide particles and serves to form the outer shape of the infrared absorber.

Although the resin medium is not particularly limited, because the infrared absorber according to the present embodiment can be used for, for example, a window material, a material having excellent visible light transmission is preferably used as the resin medium.

As the resin medium, for example, one or more resins selected from the group consisting of polyethylene resin, polyvinyl chloride resin, polyvinylidene chloride resin, polyvinyl alcohol resin, polystyrene resin, polypropylene resin, ethylene vinyl acetate copolymer, polyester resin, fluorine resin, polycarbonate resin, acrylic resin, and polyvinyl butyral resin may be preferably used.

(Structure of Infrared Absorber)

The infrared absorber according to the present embodiment has a structure including a composite tungsten oxide particle cluster including the above-mentioned composite tungsten oxide particles that are locally densely aggregated and disposed in a resin medium.

In the composite tungsten oxide particle cluster, the composite tungsten oxide particles may locally densely gather to form a cluster, and the specific shape thereof is not particularly limited. However, according to the investigation of the inventors of the present invention, the composite tungsten oxide particle cluster of the infrared absorber of the present embodiment have one or more shapes selected from a band shape, a scale shape, and a rod shape in a resin medium.

Here, a band-like shape means a rectangular shape.

A scale-like shape means not only a scaly shape but also one or more shapes selected from an oval shape, a circular shape, a polygon shape, an irregular shape, and the like.

The rod-like shape means a bar-like shape, but the shape of its end is not particularly limited. Thus, the rod-like shape may include, for example, a column-like shape, a tree-like shape, a needle-like shape, a cone-like shape and the like.

The infrared absorber according to the present embodiment is formed by stretching a mixture of, for example, a resin medium, and composite tungsten oxide particles, as described below, and in many cases, the lengthwise direction of the composite tungsten oxide particle cluster has a shape along such a stretching direction. Therefore, when the infrared absorber according to the present embodiment is viewed in a plane including the stretching direction, the composite tungsten oxide particle cluster of the infrared absorber according to the present embodiment preferably have one or more shapes selected from the above-described band shape, scale shape, and rod shape.

As noted above, the composite tungsten oxide particle cluster is a cluster composed of a plurality of composite tungsten oxide particles that is locally dense and aggregated.

The infrared absorber according to the embodiment preferably includes a composite tungsten oxide particle cluster having an area ratio S of not more than 50% that is calculated by the following formula (2) when the area of the composite tungsten oxide particles present in the composite tungsten oxide particle cluster is expressed as A, and the area surrounded by the outline of the composite tungsten oxide particle cluster is expressed as B. More preferably, the infrared absorber according to the present embodiment comprises a composite tungsten oxide particle cluster having an area ratio S of 20% or less.

$$A/B \times 100 = S \quad \cdot \cdot \cdot (2)$$

The above-mentioned area ratio S represents the ratio of the area of the composite tungsten oxide particles to the area of the region surrounded by the outline (outer circumference) of the composite tungsten oxide particle cluster. Thus, a composite tungsten oxide particle cluster having an area ratio S of 50% or less means that the composite tungsten oxide particles form a cluster at a reasonable distance and have a fine space between the particles. Therefore, even when light is emitted to the composite tungsten oxide particle cluster having the area ratio S of 50% or less, it is possible to reduce light scattering and reduce the haze of the infrared absorber, which is preferable.

In the meantime, although the lower limit value of the area ratio S is not particularly limited, because the composite tungsten oxide particle cluster has a form in which a sufficient amount of the composite tungsten oxide particles cluster, the area ratio S is preferably, for example, 1% or more, and more preferably 3% or more.

When evaluating the above-described area ratio S, the area ratio S is preferably observed and evaluated from any one selected plane. The infrared absorber according to the present embodiment can be formed by stretching a mixture of, for example, a resin medium and composite tungsten oxide particles, as described below. Therefore, it is more preferable to observe the region in the plane including such a stretching direction and to evaluate the area ratio S of the composite tungsten oxide particle cluster.

The composite tungsten oxide particle cluster containing the infrared absorber according to the present embodiment is 2 $\mu$m or less in the width direction and more preferably 1 $\mu$m or less. This is because, by making the length of the composite tungsten oxide particle cluster in the width direction 2 $\mu$m or less, the mechanical intensity of the obtained infrared absorber can be increased, and the transmission of light in the visible region can be increased, thereby increasing the absorption of light in the infrared region. Further, by making the length of the composite tungsten oxide particle cluster in the width direction 2 $\mu$m or less, the scattering of light in the visible region of the infrared absorber can be reduced, and the transparency can be increased by highly transparent properties, that is, by a low haze.

The lower limit of the length in the width direction of the composite tungsten oxide particle cluster is not particularly limited, but preferably, for example, 50 nm or more.

Furthermore, the composite tungsten oxide particle cluster containing the infrared absorber according to the present embodiment is 10 $\mu$m or less in length in the lengthwise direction, and is more preferably 5 $\mu$m or less. This is because, by making the length of the composite tungsten oxide particle cluster 10 $\mu$m or less in the lengthwise direction, the mechanical intensity of the obtained infrared absorber can be increased, and the transmission of light in the visible region can be increased, thereby increasing the absorption of light in the infrared region. In addition, by making the length of the composite tungsten oxide particle cluster 10 $\mu$m or less in the lengthwise direction, the scattering of light in the visible region of the infrared absorber can be reduced, and the transparency can be increased by highly transparent properties, that is, by a low haze.

The lower limit of the length of the composite tungsten oxide particle cluster in the lengthwise direction is not particularly limited, but preferably, for example, is 50 nm or more.

When evaluating the length of the composite tungsten oxide particle cluster in the width direction and the lengthwise direction, the composite tungsten oxide particle cluster is preferably observed and evaluated from any one selected plane. The infrared absorber according to the present embodiment can be formed by stretching a mixture of, for example, a resin medium and composite tungsten oxide particles, as described below, and in many cases, the lengthwise direction of the composite tungsten oxide particle cluster has a shape along such a stretching direction. Therefore, it is more preferable to observe the plane including such a stretching direction and to evaluate the width and longitudinal lengths of the composite tungsten oxide particle clusters.

The infrared absorber according to the present embodiment blocks infrared light by absorbing light in the infrared region at the contained composite tungsten oxide particles.

In addition, when the composite tungsten oxide particles absorb light in the infrared region, the absorbed light is converted into heat, which generates heat in the infrared absorber. As a result, the infrared absorber also serves as a heating element by absorbing light in the infrared region.

Therefore, the infrared absorber according to the present embodiment can be used, for example, as a window material that requires blocking of infrared light, or as a highly functional fiber that absorbs infrared light and generates heat.

Therefore, the infrared absorber of the present embodiment can have any shape selected from, for example, a film shape, a tape shape, and a fiber shape.

The film shape means a thin film shape. The tape shape means a strip shape that is long along the lengthwise direction, narrow in the width direction compared to the longitudinal length, and is thin and long. The tape shape may be formed, for example, by cutting an infrared absorber in the form of a film. The fiber shape means a fine threadlike shape.

When the infrared absorber according to the present embodiment is stretched into a film shape as described above, the infrared absorber is also referred to as an infrared absorbing film.

When the infrared absorber according to the present embodiment has a tape shape by cutting, for example, an infrared absorbing film into tape shapes, the infrared absorber is also considered an infrared absorbing tape.

When the infrared absorber according to the present embodiment has a fiber shape, the infrared absorber is also referred to as an infrared absorbing fiber.

The infrared absorbing film and the infrared absorbing tape absorb light in the infrared region because of the inclusion of composite tungsten oxide particle cluster, and serve to block the infrared light and to generate heat by infrared radiation.

In addition, the fiber-like stretched infrared absorbing fiber serves as a fiber that absorbs light in the infrared region and generates heat.

As described above, in order to inhibit light scattering in the visible region and to ensure transparency, it was considered necessary to uniformly disperse the particles in a transparent resin.

However, even in the infrared absorber according to the present embodiment having the composite tungsten oxide particle cluster in which the composite tungsten oxide particles cluster, the infrared absorber can absorb infrared light while reducing light scattering in the visible region and ensuring transparency. That is, an infrared absorber having a novel structure including a composite tungsten oxide particle cluster can be formed.

The infrared absorber according to the present embodiment can absorb infrared light while reducing scattering of light in the visible region and ensuring transparency of visible light as described above. Therefore, the infrared absorber can be used as a window material to absorb infrared light. Because the infrared absorber according to the present embodiment can absorb infrared light, the infrared absorber can be used as a window material to inhibit the temperature rise in the room.

The infrared absorber according to the present embodiment can be used for the intended purpose other than windows, for example, as a fiber. When the infrared absorber according to the present embodiment is used as a fiber, because the infrared absorber according to the present embodiment can convert absorbed infrared light to heat, and because the infrared absorber transmits light in the visible region, the infrared absorber can be used as a highly functional fiber that generates heat because there is little coloring.

[Method of Manufacturing Infrared Absorber]

An example of a configuration of a method of manufacturing an infrared absorber according to the present embodiment will be described below.

The above-described infrared absorber can be manufactured by the method of manufacturing the infrared absorber according to the present embodiment. Hence, explanations of some of the matters already explained will be omitted.

First, a configuration example of a method of manufacturing composite tungsten oxide particles used in the method of manufacturing the infrared absorber according to the present embodiment will be described.

(Method of Manufacturing Complex Tungsten Oxide Particles)

Because the infrared absorber according to the present embodiment includes composite tungsten oxide particles as described above, a configuration example of a method of manufacturing composite tungsten oxide particles will be first described. In the meantime, a process of manufacturing composite tungsten oxide particles in the method of manufacturing the infrared absorber according to the present embodiment is an optional process. For example, commercially available composite tungsten oxide particles may be used without performing such a process.

As described above, a composite tungsten oxide contained in composite tungsten oxide particles can be expressed by the general formula MxWyOz. The composite tungsten oxide particles containing such a composite tungsten oxide can be produced by a solid-phase reaction method of thermally processing a mixture containing tungsten and the element M, which is, for example, the starting material for the composite tungsten oxide particles. That is, a method of manufacturing composite tungsten oxide particles may include, for example, the following steps.

A process for preparing a mixture containing tungsten and the element M.

A heat treatment process of thermally treating the mixture.

Each of the processes will be described below.

(1) Mixture Preparation Process

In a mixture preparation process, a mixture containing tungsten and the element M (hereinafter simply referred to as a "mixture") can be prepared.

For example, a mixture of a tungsten-containing material and an M-element-containing material can be used as a starting material for obtaining the composite tungsten oxide particles expressed by the generic formula MxWyOz described above. Thus, the mixture preparation process can be a process of mixing the tungsten-containing material with the M element-containing material.

As the material containing tungsten, tungsten alone or a compound containing tungsten may be used as the material containing tungsten as described below. In addition, as the material containing the M element, a single M element or a compound containing the M element may be used.

In the mixture preparation process, for example, a tungsten-containing powder, which is a tungsten-containing material, may be mixed with an M element-containing powder, which is an M element-containing material, to prepare a mixture powder, which is a mixture.

As the tungsten-containing powder, for example, one or more types selected from tungsten trioxide powder, tungsten dioxide powder, hydrate of tungsten oxide, tungsten hexachloride powder, ammonium tungstate powder, hydrate of tungsten oxide obtained by dissolving tungsten hexachloride in alcohol and drying it, hydrate of tungsten oxide obtained by dissolving tungsten hexachloride in alcohol and precipitating it by drying it, tungsten compound powder obtained by drying an aqueous solution of ammonium tungstate, and metallic tungsten powder, may be preferably used.

Here, an example of using a mixed powder as a starting material have been described, but is not limited to such a form. For example, a tungsten-containing solution or dispersed liquid can be used as the starting material for obtaining composite tungsten oxide particles. When the tungsten-containing material is a tungsten-containing solution or a dispersed liquid, each element contained in the resulting mixture can be particularly easily and uniformly mixed.

Examples of the tungsten-containing solution or the dispersed liquid, which is a tungsten-containing material, include an alcohol solution of tungsten hexachloride, an aqueous ammonium tungstate solution, and a dispersed liquid and the like obtained by dissolving tungsten hexachloride in an alcohol and generating a precipitate by adding water to the alcohol solution.

When the tungsten-containing solution or dispersed liquid is used as the tungsten-containing material, the M element-containing powder may be used as the M element-containing material as described above, but the M element-containing solution may be used. Thus, for example, the tungsten-containing solution or dispersed liquid described above may be mixed with an element M-containing powder or an element M-containing solution, and then the dried mixed powder may be used as a mixture to be subjected to a heat treatment process.

The M element-containing solution may be used as the starting material, and the tungsten-containing powder may be used as the tungsten-containing material. In this case, for example, the aforementioned tungsten-containing powder may be mixed with an element M-containing solution, and then the dried mixed powder may be used as a mixture to be subjected to a heat treatment process.

The M element-containing material is not particularly limited, for example, one or more kinds selected from elemental substances of the M element or tungstate, chloride, nitrate, sulfate, oxalate, oxide, carbonate, hydroxide, and the like of the M element are cited as examples. When the M element-containing material is used as a solution as described above, the M element-containing material that becomes a solution when a solvent such as water is added, may be used.

When composite tungsten oxide particles are manufactured industrially, a raw material that does not emit toxic gases and the like is preferably used. Therefore, it is preferable that, for example, the hydrate powder of tungsten oxide or the tungsten trioxide powder be used as the tungsten-containing compound material, and the carbonate salt or the hydroxide of element M be used as the M element-containing material, respectively, because no harmful gas or the like is generated at the stage of heat treatment or the like.

The x/y, which represents the ratio of the mass x of the M element contained in the mixture of the tungsten-containing material and the M element-containing material to the mass y of the tungsten, preferably has a value depending on the composition ratio of the composite tungsten oxide suitable for the intended purpose. Specifically, in the description of the composition of the composite tungsten oxide, for example, the x/y is preferably 0.001 to $x/y \leq 1.0$, more preferably 0.001 to $x/y \leq 0.5$, further preferably 0.001 to $x/y \leq 0.37$, and particularly preferably 0.20 to $x/y \leq 0.37$.

(2) Heat treatment process

In the heat treatment process, the mixture prepared by the mixture preparation process can be thermally treated.

The heat treatment in the heat treatment process is preferably carried out in either a reducing gas atmosphere, a mixture of a reducing gas and an inert gas atmosphere, or an inert gas atmosphere.

Here, the heat treatment conditions in the heat treatment process are not particularly limited, but can be selected depending on, for example, the atmosphere of the heat treatment.

Preferably, the temperature of the heat treatment is higher than the temperature at which the composite tungsten oxide containing the composite tungsten oxide particles crystallizes, when the mixture that becomes a raw material of the heat treatment process is thermally treated in a reducing gas atmosphere or in a gas atmosphere of a mixture of a reducing gas and an inert gas.

When the mixture that is the raw material of the heat treatment process is thermally treated in a reducing gas atmosphere or in a mixture of a reducing gas and an inert gas, the heat treatment temperature is preferably 500 °C or more and 1000 °C or less, and more preferably 500 °C or more and 800 °C or less.

Further, the heat treatment may be performed in the reducing gas atmosphere or in the gas atmosphere of a mixture of the reducing gas and the inert gas, and then, if desired, further heat treatment may be performed in the inert gas atmosphere at a temperature of 500 °C or more and 1200 °C or less.

When a reducing gas is used as described above, $H_2$ (hydrogen) is preferably used, although the reducing gas is not particularly limited. In addition, when a mixture of a reducing gas and an inert gas is used, the types of the reducing gas and the inert gas are not particularly limited. However, for example, $H_2$ may be used as the reducing gas, and one or more types selected from Ar (argon), $N_2$ (nitrogen), and the like may be used as the inert gas.

When a mixture of a reducing gas and an inert gas is used, the concentration of the reducing gas is not particularly limited, and may be selected by appropriate selection depending on the firing temperature, the quantity of the mixture that is the starting material, the type of the reducing gas, and the like.

For example, in a mixture of a reducing gas and an inert gas, when $H_2$ is used as the reducing gas, the concentration is preferably not less than 0.1% by volume and not less than 2% by volume. This is because reduction can be efficiently carried out by setting the $H_2$ gas concentration in the mixture of the reducing gas and the inert gas to 0.1 volume% or more, and the ratio of oxygen to tungsten in the resulting composite tungsten oxide can be easily adjusted to the desired range.

In addition, when $H_2$ is used as the reducing gas in the gas mixture of the reducing gas and the inert gas, the concentration of $H_2$ is preferably 20 vol% or less, more preferably 10 vol% or less, and further preferably 7 vol% or less. If the concentration of the reducing gas is less than 20% by volume, the generation of $WO_2$, which does not have infrared absorbing capacity due to rapid reduction, can be reliably avoided.

When the mixture used as the raw material for the heat treatment process is thermally treated in an inert gas atmosphere, the heat treatment temperature is preferably 650 °C or more and 1000 °C or less. A mixture thermally treated at a temperature 650 °C or more and 1000 °C or less have sufficient infrared absorbing capacity and are efficient as infrared absorbing particles.

For example, an inert gas selected from Ar, $N_2$, or the like may be used as an inert gas.

By adjusting the aforementioned heat treatment temperature, heat treatment period of time and the like, the z/y representing the mass ratio (molar ratio) of tungsten and oxygen contained in the obtained composite tungsten oxide particles is preferably set to $2.2 \leq z/y \leq 3.0$ as described above.

Thus far, an example of a solid-phase reaction method of preparing composite tungsten oxide particles by thermally treating a mixture prepared in a mixture preparation process has been presented, but the method of manufacturing composite tungsten-containing particles is not limited to such a method. The composite tungsten oxide particles can be also produced, for example, by a thermal plasma method. When the composite tungsten oxide particles are manufactured by the thermal plasma method, for example, a supplying rate when supplying a raw material into the thermal plasma, a flow rate of a carrier gas used for supplying the raw material, a flow rate of the plasma gas holding the plasma region, and a flow rate of a sheath gas flowing just outside the plasma region can be adjusted to obtain composite tungsten oxide particles having a desired composition.

It should be noted that the method of manufacturing the composite tungsten oxide particles is not limited to the mixture preparation process and the heat treatment step, but may include any other processes.

The method of manufacturing the composite tungsten oxide particles may include, for example, a milling process for pulverizing the obtained composite tungsten oxide particles by a milling process or the like so as to obtain a predetermined particle size after the heat treatment process.

The method of manufacturing the composite tungsten oxide particles may include a heat treatment process or a coating process of coating the surface of the composite tungsten oxide particles obtained by the milling process with an oxide containing one or more metals selected from Si, Ti, Zr, and Al.

By performing the coating process and coating the surface of the composite tungsten oxide particles, weather resistance can be improved, which is preferred. The coating method is not particularly limited, and includes a method of adding an alkoxide of one or more metals selected from Si, Ti, Zr, and Al to a solution in which the composite tungsten oxide particles are dispersed.

(Method of Manufacturing Infrared Absorber)

Next, a configuration example of a method of manufacturing an infrared absorber according to the present embodiment will be described.

The infrared absorber obtained by the method of manufacturing the infrared absorber according to the present embodiment is a composite tungsten oxide particle cluster in a resin medium. Therefore, in the method of manufacturing the infrared absorber according to the present embodiment, the composite tungsten oxide particles can be mixed and formed in the resin medium.

A specific configuration example of a method of manufacturing an infrared absorber according to the present embodiment will be described below.

A method of manufacturing an infrared absorber according to the present embodiment may include, for example, the following processes.

A dispersed liquid preparation process in which composite tungsten oxide particles are dispersed in a solvent to prepare a composite tungsten oxide particle dispersed liquid.

A master batch preparation process of preparing a master batch containing composite tungsten oxide particles from a composite tungsten oxide particle dispersed liquid.

A molding process for molding a master batch containing composite tungsten oxide particles.

Hereinafter, each process will be described.

(1) Dispersed Liquid Preparation Process

In the dispersed liquid preparation process, composite tungsten oxide particles can be mixed and dispersed in a solvent to prepare a composite tungsten oxide particle dispersed liquid.

The solvent in which the composite tungsten oxide particles are dispersed in the dispersed liquid preparation process is not particularly limited, and the solvent can be selected in consideration of the applicability to processing when the dispersed liquid is used as the master batch in the master batch preparation process to be described later.

One or more solvents selected from, for example, water, ethanol, propanol, butanol, isopropyl alcohol, isobutyl alcohol, alcohols such as diacetone alcohol, ethers such as methyl ether, ethyl ether, propyl ether, ketones such as esters, acetone, methyl ethyl ketone, diethyl ketone, cyclohexanone, isobutyl ketone, methyl isobutyl ketone (MIBK), aromatic hydrocarbons such as toluene, and the like can be used as the solvent.

The solvent is not limited to the above-described solvent, and, for example, a resin monomer or oligomer may be used.

The content of the solvent in the composite tungsten oxide particle dispersed liquid is not particularly limited, but it is preferable to contain not less than 80 parts by mass of the solvent with respect to 100 parts by mass of the composite tungsten oxide particles. This is because by setting the ratio of the solvent to the 100 mass parts of the composite tungsten oxide particles to 80 or more parts by mass, the preservability as a dispersed liquid can be easily guaranteed, and the workability in the subsequent preparation of a master batch containing the composite tungsten oxide particles can be increased.

The upper limit of the solvent ratio to 100 mass parts of the composite tungsten oxide particles is not particularly limited, but the solvent ratio to 100 mass parts of the composite tungsten oxide particles is preferably 400 mass parts or less so that the solvent can be easily removed when manufacturing the composite tungsten oxide particle-containing master batch. Moreover, because a large amount of solvent remaining in the master batch containing composite tungsten oxide particles, foam and the like may be caused. Therefore, the residual amount of the organic solvent in the master batch is preferably 0.5 mass% or less.

Various dispersing agents, surfactants, coupling agents, resin modifiers, and the like can be also added to the dispersed liquid to adjust the dispersion state of the resulting composite tungsten oxide particle dispersed liquid and the composite tungsten oxide particle in the infrared absorber.

When a dispersing agent is added to the composite tungsten oxide particle dispersed liquid according to the present embodiment, the dispersing agent is not particularly limited. For example, a group containing an amine, a hydroxyl group, a carboxyl group, or an epoxy group may be preferably used as the dispersing agent.

These functional groups serve to adjust the distance between composite tungsten oxide particles in a master batch to be obtained in the next process by adsorbing onto the surface of the composite tungsten oxide particles. A polymer-based dispersant having any of these functional groups in a molecule can be more preferably used as a dispersant and the like.

Such dispersing agents and the like include Solsperse (registered trademark) 9000, 12000, 17000, 20000, 21000, 24000, 2600, 27000, 2800, 32000, 32500, 35100, 41000, 53095, 54000, 250, Sol Plus (registered trademark) DP310, DP 320, DP 330, L300, L400, K500, R700 (manufactured by Lubrizol Corporation of Japan), EFKA (registered trademark) 4008, 4009, 4010, 4015, 4046, 4047, 4060, 4080, 7462, 4020, 4050, 4055, 4040, 4401, 4402, 4403, 4300, 4320, 4330, 4340, 416, 4425, 4575, 4585, 4590, 6290, 6225, 6225, 6700.6780, 6782, 8503 (manufactured by EFKA Additives Corporation), Ajisper (registered trademark) PA111, PB822, and PB824, PN411, Faymex L-12 (manufactured by Ajinomoto Fine Techno Co., Ltd.), DisperBYK (registered trademark) 101, 102, 106, 108, 111, 116, 130, 140, 142, 145, 161, 162, 163, 164, 166, 167, 168, 170, 171, 174, 180, 182, 192, 193, 2000, 2001, 2012, 2013, 2020, 2020, 2025, 2050, 2070, 2155, 2164, 2160S, 300, 306, 320, 322, 325, 330, 340, 350, 350, 377, 378, 380, 410, 425, 430, BYK (registered trademark) 9076, 9077, P4100, P4101 P4102 (manufactured by BYK Japan KK), DISPARLON (registered trademark) 1751N, 1831, 1850, 1860, 1934, DA-400N, DA-703-50, DA-725, DA-7301, DN-900, These include NS-5210, NVI-8514L (manufactured by Kusumoto Chemicals, Ltd.), ARUFON (registered trademark) UC-3000, UF-5022, UG-4010, UG-4035, UG-4070 (manufactured by Toagosei Co., Ltd.), TERPLUS (registered trademark) D1180, D1330, MD1000 (manufactured by Otsuka Chemical Co., Ltd.), KBM-573, 575, 903, KBE-9007, 9103 (manufactured by Shin-Etsu Chemical Co., Ltd.) and the like.

The method of dispersing the composite tungsten oxide particles into the solvent is not particularly limited, but there is a method using one or more types of dispersion devices selected from, for example, a bead mill, a ball mill, a sand mill, a paint shaker, an ultrasonic homogenizer and the like.

Through the mechanical dispersion process using these dispersion devices, the composite tungsten oxide particles are dispersed in the solvent, and at the same time, micronization progresses due to collision between the composite tungsten oxide particles.

The dispersion processing conditions (also referred to as pulverization conditions, particulate micronization conditions and the like) can be selected so that the particle size, crystallite size and the like of the composite tungsten oxide particles contained in the composite tungsten oxide particle dispersed liquid can be within the desired range.

The state of the composite tungsten oxide particle dispersed liquid obtained in the dispersed liquid preparation process can be confirmed by measuring the dispersion state of the composite tungsten oxide particles when the composite tungsten oxide particles are dispersed in a solvent.

The state of the composite tungsten oxide particle dispersed liquid can be ascertained, for example, by sampling a sample from a liquid containing the composite tungsten oxide particles as particles or a cluster of particles in a solvent and by measuring the particles with various commercially available size distribution meters. As the particle size distribution meter, for example, a known measuring device such as the ELS-8000 manufactured by Otsuka Electronics Co., Ltd. or a nanotrack (registered trademark) manufactured by Macro-Trackbell Co., Ltd. using a dynamic light scattering method can be used.

One example of the indexes for the state of the composite tungsten oxide particle dispersed liquid includes the dispersed particle size and particle size distribution of the composite tungsten oxide particles. From the viewpoint of optical properties, the dispersed particle size measured by the ELS-8000 manufactured by Otsuka Electronics Co., Ltd. is preferably 800 nm or less, more preferably 200 nm or less, and further preferably 100 nm or less. The lower limit value of the dispersed particle size is not particularly limited, but may be, for example, 10 nm or more.

Because the dispersed particle size of the composite tungsten oxide particles is 800 nm or less, the color of the finally obtained infrared absorber (including various shapes such as film, tape, and fibers) can be avoided from becoming a gray based color.

(2) Master Batch Preparation Process

In a master batch preparation process, a composite tungsten oxide particle containing master batch can be prepared from a composite tungsten oxide particle dispersed liquid.

The method of preparing a master batch containing complex tungsten oxide particles (hereinafter, simply referred to as a "master batch") from a composite tungsten oxide particle dispersed liquid is not particularly limited.

The master batch preparation process may include, for example, each of the following steps.

The solvent removal step of reducing and removing the solvent contained in the composite tungsten oxide particle dispersed liquid to an amount permitted to remain in the master batch or less.

In the meantime, in the solvent removal step, the solvent may be significantly reduced and removed to form a composite tungsten oxide particle dispersed powder.

A kneading and forming step for making a master batch by kneading the compound tungsten oxide particle dispersed liquid obtained in the solvent removal step or the dispersed powder with the resin medium.

Each step is described.

First, the solvent removal step will be described.

In the solvent removal step, the solvent can be reduced and removed from the composite tungsten oxide particle dispersed liquid as described above.

The method of removing the solvent from the composite tungsten oxide particle dispersed liquid is not particularly limited. However, for example, a method of drying the composite tungsten oxide particle dispersed liquid under reduced pressure may be preferably used. Specifically, the composite tungsten oxide particle dispersed liquid is dried under the reduced pressure while stirring the dispersed liquid to separate the composite tungsten oxide particle-containing composition from the solvent component. The pressure value in the decompression is not particularly limited, and can be appropriately selected depending on, for example, the time of the solvent removal step. In the meantime, in order to obtain the composite tungsten oxide particle dispersed powder, the composite tungsten oxide particle dispersed liquid preferably contains the aforementioned polymer-based dispersant.

By using the reduced-pressure drying method in the solvent removal step, the solvent removal efficiency from the composite tungsten oxide particle dispersed liquid improves, and at the same time, it is possible to reduce a period of time when the composite tungsten oxide particle dispersion liquid or the composite tungsten oxide particle dispersion powder obtained after the solvent removal step is exposed to a high temperature. Therefore, the dispersed liquid or the cluster of composite tungsten oxide particles dispersed in the dispersion powder do not progress excessively, which is preferable. Furthermore, the productivity of the composite tungsten oxide particle dispersion powder is increased, and the evaporated solvent is easily recovered, which is preferable from the viewpoint of environmental considerations.

In the composite tungsten oxide particle dispersed liquid obtained after the solvent removal step or in the composite tungsten oxide particle dispersion powder, the residual organic solvent is preferably not more than 5 mass%. If the residual organic solvent is 5 mass% or less, no air bubbles are generated when the composite tungsten oxide particle dispersed liquid or the composite tungsten oxide particle dispersion powder is processed into a master batch, and no air bubbles are included in the resulting master batch milled powder, which is preferable from the viewpoint of chemical resistance.

The apparatus used for the solvent removal step is not particularly limited. However, a vacuum fluid dryer, a vibration fluid dryer and the like can be preferably used from the viewpoint of capable of heating and depressurizing the dispersed liquid and easily mixing and recovering the dispersion powder.

The master batch is obtained by kneading composite tungsten oxide particles with a resin medium and by forming a pellet of a kneaded matter obtained by dispersing them in a resin medium.

Specifically, after mixing and melting the composite tungsten oxide particle dispersed liquid or the composite tungsten oxide particle dispersion powder obtained after the solvent removal step, the powder or pellet of the resin medium, and other additives, if necessary, and then they are kneaded in a vent-type single-axis extruder or a twin-axis extruder. Then, a master patch is obtained by molding and processing the kneaded matter into a pellet shape using a general method of cutting the kneaded matter melted and extruded (kneading and molding step).

On this occasion, a degree of kneading and conditions are preferably adjusted by performing a preliminary test so that composite tungsten oxide particle cluster remains in the obtained master batch.

The shape of the master batch is not particularly limited, but may include, for example, a columnar shape or a prismatic shape. A so-called hot cut method of cutting molten extrudates can also be employed. In this case, the master batch is typically shaped like a spherical shape.

(3) Forming process

In the molding process, a master batch can be molded.

In the molding process, specifically, the previously described master batch containing composite tungsten oxide particles may be stretched. Thus, the infrared absorber according to the present embodiment can be obtained.

In a master batch, the composite tungsten oxide particles form a loosely aggregating cluster of particles that is stretched to form a composite tungsten oxide particle cluster in a resin medium.

The stretch may be uniaxial or biaxial to form a film or tape, or the stretch may be unidirectional to form a fiber. Conditions for the stretch may be selected as appropriate, such as tension generated in the infrared absorber.

In the molding process, the resin kneaded by adding the resin medium to the master batch can be also molded.

Elongation conditions and the like are preferably selected so as to form a composite tungsten oxide particle cluster within the infrared absorber obtained by the molding process, while checking the occurrence conditions and the like of the complex tungsten oxide particle cluster in the infrared absorber obtained after the molding process, for example, by a preliminary test.

An example of a configuration for manufacturing an infrared absorbing film that is an infrared absorbing material having a film shape using a master batch will be described.

The master batch is heated to melt and the melt master batch is formed into a sheet by a melt extrusion process using a T-die or the like. An infrared absorbing film that is an infrared absorber can be obtained by biaxially stretching the molded sheet.

[Working Example]

The invention will be described in more detail below with reference to working examples.

(Evaluation Method)

The evaluation method of each working example and comparative example will be described below.

(1) Visible light transmittance, solar transmittance, haze

The visible light transmittance and the solar transmittance of the infrared absorber in the following working examples and reference examples were measured in accordance with ISO 9050 and JIS R 3106 (1998). Specifically, the transmittance was measured using a spectrophotometer U-4100 manufactured by Hitachi, Ltd., and calculated by multiplying by a factor according to the spectrum of sunlight. The transmittance was measured at 5 nm intervals in the range from 300 nm to 2100 nm. The solar transmittance is an index of the heat blocking characteristics of the infrared absorber.

The haze value was measured using a haze meter HM-150 manufactured by MURAKAMI COLOR RESEARCH LABORATORY.

(2) Dispersed Particle Size

The dispersion particle size of the composite tungsten oxide particle dispersed liquid was measured using a particle size distribution meter ELS-8000 (manufactured by Otsuka Electronics Co., Ltd.).

(3) Average Particle Size

First, a composite tungsten oxide particle dispersion element in which the obtained composite tungsten oxide particles are uniformly dispersed in the resin was manufactured. Then, a thinned sample of the composite tungsten oxide particle dispersion element was prepared by processing a cross section.

The average particle size of the composite tungsten oxide particles was obtained by measuring the particle size of 100 composite tungsten oxide particles using an image processing apparatus and calculating the average value from the transmission electron microscope image of the prepared thinned sample.

[Working Example 1]

A solution was obtained by dissolving 7.43 kg of cesium carbonate ($Cs_2CO_3$) in 6.70 kg of water. The solution was added to 34.57 kg of tungstic acid ($H_2WO_4$) that is a monohydrate of tungsten trioxide, stirred and mixed well, and dried while stirring the solution, thereby obtaining a mixture. The ratio of W to Cs (molar ratio) in the resulting mixture is 1:0.33 (mixture preparation process).

The obtained mixture after drying was heated while supplying 5 volume% of $H_2$ gas using $N_2$ gas as a carrier, and fired at a temperature of 800 °C for 5.5 hours. Subsequently, the supply gas was switched over to $N_2$ gas only, and the temperature was decreased to room temperature, thereby obtaining cesium tungsten oxide particles a (heat treatment process).

A composite tungsten oxide particle dispersed liquid (A-1 liquid) was prepared by weighing the cesium tungsten complex oxide particles a 25% by mass, the dispersant a 15% by mass, and the solvent MIBK 60% by mass, loading them into a paint shaker (manufactured by Asada Iron Co., Ltd.) containing 0.3 mm φ $ZrO_2$ beads, and pulverizing and dispersing them for 20 hours (dispersed liquid preparation process).

In the meantime, as the dispersant a, a modified acrylic block copolymer (amine number 29, acid number 13) that is a polymeric dispersant and has a group containing an amine as a functional group was used.

When the dispersed particle size of the obtained composite tungsten oxide particle dispersed liquid was measured, the dispersed particle size was 70 nm.

The resultant composite tungsten oxide particle dispersed liquid (A-1 liquid) was removed by a reduced-pressure drying method using a vacuum flow dryer until MIBK became 2 mass%, and a composite tungsten oxide particle dispersed powder (A-1 powder) according to Working Example 1 was obtained (solvent removal step).

The obtained 100 parts by mass of A-1 powder was mixed with 1400 parts by mass of polyethylene terephthalate resin pellet, melt and kneaded using a two-axis extruder to obtain a kneaded material, which was extruded into a string to obtain a string. The melt temperature during melt kneading was 270 °C.

The obtained string was cut into 4 mm long pellets, thereby obtaining a master batch (A-1 master batch) (kneading and forming step).

The obtained A-1 master batch was charged to a single-axis extruder at 270 °C and extruded onto a cooling roll through which a refrigerant circulates at a temperature of 65 °C by a melt extrusion process using a T-die, thereby obtaining a sheet with a thickness of 300 $\mu$m. The obtained sheet was cut in 5 cm squares and biaxially stretched to a 40 $\mu$m thick film, thereby obtaining an infrared absorbing film that was an infrared absorber. When a surface of the obtained infrared absorbing film in a stretching direction was observed using an electron microscopy, a cesium tungsten oxide composite particle cluster with a width, which is a length in the width direction, of 500 nm, and a length of 1 $\mu$m in the longitudinal direction was observed.

In addition, the average particle size of the individual cesium tungsten composite oxide particles contained in the cesium tungsten composite oxide particle cluster was 22 nm.

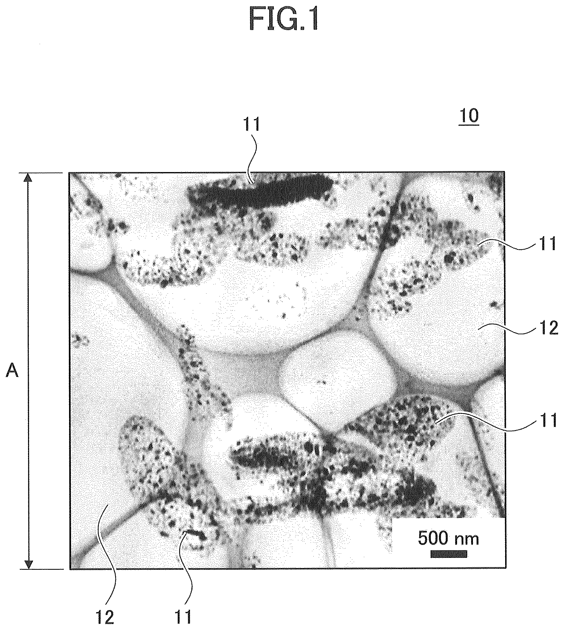

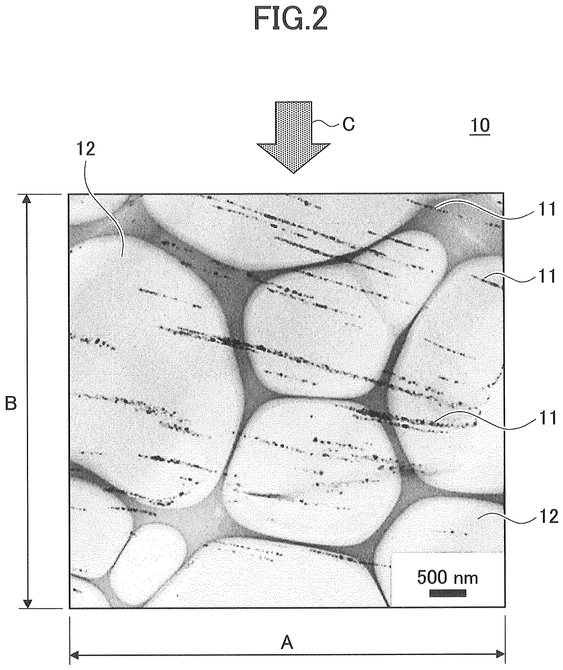

In addition, the area ratio S of the cesium tungsten oxide composite particle cluster in the field of electron microscopy was 18%. The transmission electron micrographs of the infrared absorber are shown in FIG. 1 and FIG. 2.

FIG. 1 shows an observation photograph in the plane parallel to the stretching direction A, and FIG. 2 shows an observation photograph in the stretching direction A and in the plane parallel to the obtained film thickness direction B of the infrared absorber. In the meantime, the observation photograph when the infrared absorber is observed along the block arrow C in FIG. 2 corresponds to FIG. 1.

As shown in FIG. 1 and FIG. 2, it was found that the obtained infrared absorber 10 has a composite tungsten oxide particle cluster 11. It was found that the infrared absorber 10 shown in FIG. 1 and FIG. 2 has an elliptical, plate-like, or scaly composite tungsten oxide particle cluster 11.

Further, in FIG. 1 and FIG. 2, although the member 12 fixing the specimen is imaged in the background of the photograph, this does not constitute the infrared absorber.

With respect to the infrared absorbing film that is the obtained infrared absorber, visible light transmittance, solar transmittance, transmittance at a wavelength of 500 nm, and transmittance and haze values at a wavelength of 1000 nm was measured. The results are shown in Table 1.

[Reference Example 1]

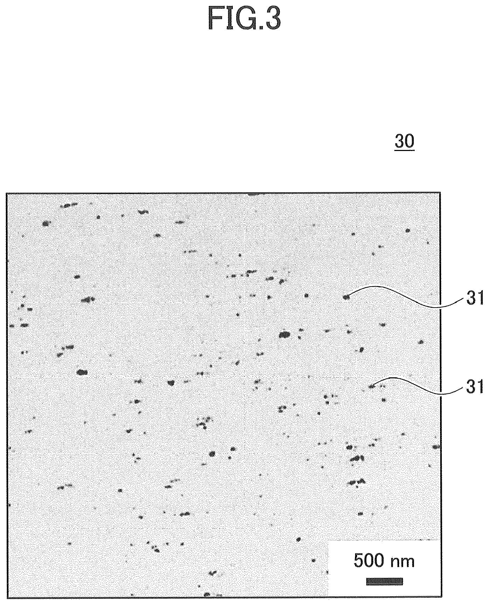

One hundred parts by mass of UV curing resin was added to 100 parts by mass of the A-1 liquid according to Working Example 1, and the coating liquid (B-1 liquid) was obtained by sufficiently mixing the liquid. The B-1 liquid was applied to a transparent PET film having a visible light transmittance of 90.5% by a bar coater, dried by holding the temperature at 70 °C for 1 minute, and the MIBK of the solvent was removed, and then was irradiated with ultraviolet light, thereby obtaining an ultraviolet curing film, which is an infrared absorber. Electron micrographs of the obtained ultraviolet curing film are shown in Fig. 3. As shown in FIG. 3, in the ultraviolet curing film 30, it is possible to confirm that the cesium tungsten composite oxide particles 31 do not cluster together, and are uniformly dispersed.

With respect to the UV curing film that is the obtained infrared absorber, visible transmittance, solar transmittance, transmittance at 500 nm, and transmittance and haze values at 1000 nm, were measured. The results are shown in Table 1.

[TABLE 1]

| | VISIBLE LIGHT TRANSMITTANCE (%) | SOLAR TRANSMITTANCE (%) | TRANSMITTANCE AT 500 nm (%) | TRANSMITTANCE AT 1000 nm (%) | HAZE VALUE (%) |
|---|---|---|---|---|---|
| WORKING EXAMPLE 1 | 69.8 | 35.7 | 74.36 | 8.41 | 1.5 |
| REFERENCE EXAMPLE 1 | 70.2 | 34.8 | 75.82 | 7.25 | 1.0 |

According to the results shown in Table 1, the infrared absorber of Working Example 1 has a slightly higher haze value than that of the infrared absorber of Working Example 1, but is within the scope of the influence of the substrate. Accordingly, the results indicate that the infrared absorber of Working Example 1 has the same infrared absorption properties as those of the infrared absorber of Working Example 1.

In other words, it was confirmed that the infrared absorber including the composite tungsten oxide particle cluster, which is a novel structure, has the same optical properties as those of the infrared absorber in which the composite tungsten oxide particles are uniformly dispersed.

The present application is based upon and claims priority to Patent Application No. 2017-219399 filed with the Japanese Patent Office on November 14, 2017.

DESCRIPTION OF THE REFERENCE NUMERALS

10    infrared absorber
11    composite tungsten oxide particle cluster

**Claims**

1. An infrared absorber, comprising:

   a resin medium; and
   a composite tungsten oxide particle cluster composed of composite tungsten oxide particles clustered together and disposed in the resin medium,
   wherein the composite tungsten oxide particle cluster has at least one shape selected from the group consisting of a band shape, a scale shape and a rod shape,
   and wherein a length of the composite tungsten oxide particle cluster is 2 um or less in a widthwise direction and 10 $\mu$m or less in a lengthwise direction as determined following stretching of a mixture of the composite tungsten oxide particles and the resin according to the procedure of the description.

2. The infrared absorber as claimed in claim 1, wherein the composite tungsten oxide particles contain a composite tungsten oxide expressed by the following general formula (1):

   $$M_xW_yO_z \qquad (1),$$

   (wherein an element M contains at least one element selected from an alkali metal element and a alkali-earth metal element; W represents tungsten; O represents oxygen; and x, y, and z each satisfy $0.001 \leq x/y \leq 0.37$ and $2.2 \leq z/y \leq 3.0$.).

3. The infrared absorber as claimed in claim 1 or claim 2, wherein the composite tungsten oxide particles contain a composite tungsten oxide having a hexagonal crystal structure.

4. The infrared absorber as claimed in any one of claims 1 to 3, wherein when an area of the composite tungsten oxide particles present in the composite tungsten oxide particle cluster is expressed as A, and an area of a region enclosed by an outline of the composite tungsten oxide particle cluster is expressed as B, an area ratio S calculated by the following formula (2) is 50% or less,

   $$A/B \times 100 = S \qquad (2).$$

5. The infrared absorber as claimed in any one of claims 1 to 4, wherein the resin medium is at least one resin selected from the group consisting of polyethylene resin, polyvinyl chloride resin, polyvinylidene chloride resin, polyvinyl alcohol resin, polystyrene resin, polypropylene resin, ethylene vinyl acetate copolymer, polyester resin, fluorine resin, polycarbonate resin, acrylic resin, and polyvinyl butyral resin.

6. The infrared absorber as claimed in any one of claims 1 to 5, wherein the infrared absorber has any shape selected from a film shape, a tape shape, and a fiber shape.

**Patentansprüche**

1. Infrarotabsorber, umfassend:

   ein Harzmedium; und
   ein zusammengesetztes Wolframoxidpartikelcluster, das aus geclusterten Wolframoxidpartikeln besteht, die miteinander gebündelt und im Harzmedium angeordnet sind,
   wobei das zusammengesetzte Wolframoxidpartikelcluster mindestes eine Form hat, die aus der Gruppe ausgewählt ist, die aus einer Bandform, einer Schuppenform und einer Stangenform ausgewählt ist,
   und wobei eine Länge des zusammengesetzten Wolframoxidpartikelclusters 2 $\mu$m oder weniger in einer Breitenrichtung und 10 $\mu$m oder weniger in einer Längsrichtung beträgt, wie sie dem Strecken dieses Gemischs aus den zusammengesetzten Wolframoxidpartikeln und dem Harz nach der Prozedur der Beschreibung bestimmt wird.

2. Infrarotabsorber nach Anspruch 1, wobei die zusammengesetzten Wolframoxidpartikel ein zusammengesetztes Wolframoxid umfassen, was durch die folgende allgemeine Formel (1) ausgedrückt ist :

   $$M_xW_yO_z \qquad (1),$$

   (wobei ein Element M mindestens ein Element enthält, das aus einem Alkalimetallelement und einem Erdalkalimetallelement ausgewählt ist; W Wolfram darstellt; O Sauerstoff darstellt; und x, y und z jeweils $0{,}001 \leq x/y \leq 0{,}37$ und $2{,}2 \leq z/y \leq 3{,}0$ genügen.

3. Infrarotabsorber nach Anspruch 1 oder Anspruch 2, wobei die zusammengesetzten Wolframoxidpartikel ein zusammengesetztes Wolframoxid mit einer hexagonalen Kristallstruktur umfassen.

4. Infrarotabsorber nach einem der Ansprüche 1 bis 3, wobei eine Fläche der zusammengesetzten Wolframoxidpartikel, die im zusammngesetzten Wolframoxidpartikelcluster vorhanden ist, als A ausgedrückt wird, und eine Fläche eines Bereichs, der von einer Außenlinie des zusammngesetzten Wolframoxidpartikelclusters eingeschlossen wird, als B ausgedrückt wird, und ein Flächenverhältnis S, das durch die folgende Formel (2) berechnet wird, 50% oder weniger beträgt,

   $$A/B \ X \ 100 = S \qquad (2).$$

5. Infrarotabsorber nach einem der Ansprüche 1 bis 4, wobei es sich bei dem Harzmedium um mindestens ein Harz handelt, das aus der Gruppe ausgewählt ist, die aus Polyethylenharz, Polyvinalchloridharz, Polyvinyidenchloridharz, Polyvinylalkoholharz, Polystyrolharz, Polypropylenharz, Ethylenvinylacetatcopolymer, Polyesterharz, Fluorharz, Polycarbonatharz, Acrylharz und Polyvinylbutyralharz besteht.

6. Infrarotabsorber nach einem der Ansprüche 1 bis 5, wobei der Infrarotabsorber eine belebide Form hat, die aus einer Filmform, einer Bandform und einer Faserform ausgewählt ist.

**Revendications**

1. Un absorbeur d'infrarouge, comprenant :

   un milieu résineux ; et
   un cluster de particules composites d'oxyde de tungstène formé de particules composites d'oxyde de tungstène regroupées et disposées dans le milieu résineux,
   dans lequel le cluster de particules composites d'oxyde de tungstène comporte au moins une forme sélectionnée dans le groupe constitué d'une forme de bande, d'une forme d'écaille et d'une forme de tige,
   et dans lequel une longueur du cluster de particules composites d'oxyde de tungstène est de 2 $\mu$m ou moins dans le sens de la largeur et de 10 $\mu$m ou moins dans le sens de la longueur comme déterminé après étirement d'un mélange des particules composites d'oxyde de tungstène et de la résine selon le procédé décrit dans la description.

**2.** Absorbeur d'infrarouge tel que revendiqué dans la revendication 1, dans lequel les particules composites d'oxyde de tungstène contiennent un oxyde de tungstène composite exprimé par la formule générale (1) suivante :

$$MxWyOz \qquad (1),$$

(formule dans laquelle un élément M contient au moins un élément choisi parmi un élément métal alcalin et un élément métal alcalino-terreux ; W représente le tungstène ; O représente l'oxygène ; et x, y et z satisfont chacun à la formule

$$0,001 \leq x/y \leq 0,37 \text{ et } 2,2 \leq z/y \leq 3,0).$$

**3.** L'absorbeur d'infrarouge tel que revendiqué dans la revendication 1 ou la revendication 2, dans lequel les particules composites d'oxyde de tungstène contiennent un oxyde de tungstène composite ayant une structure cristalline hexagonale.

**4.** L'absorbeur d'infrarouge tel que revendiqué dans l'une quelconque des revendications 1 à 3, dans lequel lorsqu'une surface de particules composites d'oxyde de tungstène présentes dans le cluster de particules composites d'oxyde de tungstène est exprimée par A, et une surface d'une région entourée par un contour du cluster de particules composites d'oxyde de tungstène est exprimé par B, un rapport de surface S calculé par la formule suivante (2) est de 50 % ou moins,

$$A/Bx100=S \qquad\qquad (2),$$

**5.** L'absorbeur d'infrarouge tel que revendiqué dans l'une quelconque des revendications 1 à 4, dans lequel le milieu résineux est au moins une résine choisie dans le groupe constitué par une résine de polyéthylène, par une résine de chlorure de polyvinyle, par une résine de chlorure de polyvinylidène, par une résine d'alcool polyvinylique, par une résine de polystyrène, par une résine de polypropylène, par un copolymère éthylène-acétate de vinyle, par une résine de polyester, par une résine fluorée, par une résine de polycarbonate, par une résine acrylique et par une résine de polyvinylbutyral.

**6.** L'absorbeur d'infrarouge tel que revendiqué dans l'une quelconque des revendications 1 à 5, dans lequel l'absorbeur d'infrarouge présente n'importe quelle forme choisie parmi une forme de film, une forme de ruban et une forme de fibre.

## FIG.1

# FIG.2

500 nm

# FIG.3

500 nm

**REFERENCES CITED IN THE DESCRIPTION**

**Patent documents cited in the description**

- JP 2003029314 A
- JP H9107815 A
- JP H859300 A
- JP H812378 A
- JP H8283044 A
- JP 2000119045 A
- JP H9127559 A
- JP 2003121884 A
- JP H873223 A
- WO 2005037932 A
- WO 2017219399 A